# EUROPÄISCHE PATENTSCHRIFT

(11) **EP 0 878 617 B1**
(45) Veröffentlichungstag und Bekanntmachung des Hinweises auf die Patenterteilung: **28.05.2003**
(21) Anmeldenummer: 98107920.5
(22) Anmeldetag: 30.04.1998
(51) Int. Cl.: F02D 41/38, F02D 41/24, F02D 41/40

(54) **Verfahren zur Bestimmung der Öffnungszeit eines Einspritzventiles eines Common-Rail-Einspritzsystemes**
Method for the determining of the opening time of a fuel injector in a Common-rail fuel injection system
Méthode de détermination du temps d'ouverture d'un injecteur dans un système d'injection avec rampe à carburant commune.

(30) Priorität: 15.05.1997 DE 19720378
(43) Veröffentlichungstag der Anmeldung: 18.11.1998
(73) Patentinhaber: DaimlerChrysler AG, 70567 Stuttgart (DE)
(72) Erfinder: Dietz, Martin, 70329 Stuttgart (DE); Lindemann, Bernd, 70193 Stuttgart (DE); Steffen, Erhard, 71332 Waiblingen (DE)

(56) Entgegenhaltungen:
- EP-A- 0 488 362
- EP-A- 0 570 986
- EP-A- 0 651 150
- DE-A- 19 712 143

## Beschreibung

Die vorliegende Erfindung betrifft ein Verfahren zur Bestimmung der Öffnungszeit eines Einspritzventiles eines Common-Rail-Einspritzsystemes, bei dem aus einem Kennfeld anhand der einzuspritzenden Kraftstoffmenge und des statischen Druckes im Common-Rail eine Einspritzdauer abgeleitet wird.

Derartige Common-Rail Einspritzsysteme sind allgemein bekannt. In der EP 0 570 986 A2 ist eine Weiterbildung beschrieben, bei der der Einspritzvorgang in zwei Teile unterteilt wird. Es erfolgt eine sogenannte "pilot injection" als Voreinspritzung und eine sogenannte "main injection" als Haupteinspritzung. Die zur Förderung einer bestimmten Kraftfstoffmenge ermittelte Öffnungszeit des Einspritzventiles wird auf die pilot injection und die main injection aufgeteilt. Bei der Ansteuerung des Einspritzventiles in der main injection period wird berücksichtigt, daß aus der pilot injection period noch ein verbleibendes Magnetfeld in dem eletromagnetischen Einspritzventil vorhanden ist, so daß zur Förderung der Kraftfstoffmenge also in der main injection period die Ansteuerdauer des Einspritzventiles entsprechend reduziert werden muß. Der Grad der Reduzierung ist dabei proportional der Dauer der pilot injection period und umgekehrt proportional dem zeitlichen Abstand der pilot injection period und der main injection period. Nach den Ausführungen in dieser Offenlegungsschrift sollen mit dieser Vorgehensweise auch nachteilige Effekte von Druckschwankungen vermieden werden können.

Erfindungsgemäß wird für die Ablesung im Kennfeld der Wert des statischen Druckes im Common-Rail um einen bestimmten Betrag korrigiert, der sich sowohl aus dem Schwingungsverhalten des Kraftstoffes in Abhängigkeit von dessen Kompressibilität, als auch aus der entnommenen Kraftstoffmenge oder der Ansteuerdauer des Einspritzventils bei wenigstens einem vorausgehenden Einspritzvorgang, als auch der Zeit zwischen dem wenigstens einen vorausgehenden Einspritzvorgang und dem aktuellen Einspritzvorgang ergibt.

Dabei zeigt sich vorteilhaft gegenüber dem bekannten Stand der Technik, daß die Öffnungsdauer des Einspritzventiles besser an den veränderlichen Druck angepaßt wird. Die Schwingung des Druckes bewirkt, daß dieser zunächst abfällt und dann ansteigt. Dieser Anstieg schwingt dabei sogar über den Wert des statischen Druckes im Common-Rail-System hinaus. Um also im Hinblick auf die Druckschwingungen sinnvoll entscheiden zu können, ob die Öffnungszeit des Einspritzventiles gegenüber der Öffnungszeit bei einem statischen Druck im Common-Rail-System verkürzt oder verlängert werden muß, muß also der momentane zeitliche Wert des Druckes festgestellt werden. Der Zeitverlauf der Druckschwingungen zeigt dabei insbesondere, daß es infolge der Verringerung der Kraftfstoffmenge im Common-Rail zunächst zu einem Absinken des Druckes kommt. Wenn also der nächste Einspritzvorgang zeitlich so dicht auf den vorausgehenden Einspritzvorgang folgt, daß die Druckschwingung nicht bereits wieder den Wert des statischen Druckes im Common-Rail überschritten hat, so muß die Öffnungsdauer des Einspritzventiles verlängert werden.

Durch die Maßnahmen nach Anspruch 1 läßt sich also die Steuerung der tatsächlich eingespritzten Kraftstoffmenge in Relation zu der angeforderten Kraftfstoffmenge deutlich verbessern. Dies führt zu einem wesentlich optimierten Brennvorgang insbesondere hinsichtlich der Kraftfstoffausnutzung und der Schadstoffemissionen.

Bei der Ausgestaltung des Verfahrens nach Anspruch 2 wird das Zeitverhalten einer Druckschwingung anhand wenigstens einer Größe bestimmt, die die Kompressibilität des Kraftstoffes repräsentiert.

Modellhaft läßt sich die Druckschwingung als eine Schwingung mit einer einzigen Frequenz darstellen. Die Praxis zeigt jedoch, daß die Schwingung sich als Überlagerung mehrerer Schwingungen mit unterschiedlicher Frequenz darstellt. Das Zeitverhalten der Schwingung wird daher in Abhängigkeit von der Kompressibilität in einem Kennfeld abgelegt.

Es können also vorteilhaft Unterschiede im Druckverlauf berücksichtigt werden in Abhängigkeit von bestimmten Parametern wie beispielsweise der Kraftfstofftemperatur. Die Kompressibilität des Kraftfstoffes bestimmt entscheidend das Zeitverhalten der Druckschwingung.

Bei dem Verfahren nach Anspruch 3 ist die wenigstens eine Größe, die die Kompressibilität repräsentiert, die Schallgeschwindigkeit des Kraftstoffes, das Elasitizitätsmodul des Kraftstoffes und/oder die Dichte des Kraftstoffes.

Dabei zeigt sich vorteilhaft, daß die Kompressibilität des Kraftstoffes leicht anhand vergleichsweise einfach zugänglicher Parameter bestimmt werden kann.

Bei dem Verfahren nach Anspruch 4 wird die wenigstens eine Größe anhand des statischen Raildruckes und/oder der Kraftfstofftemperatur bestimmt.

Dadurch können die wichtigsten Einflüsse auf die Kompressibilität des Kraftfstoffes einfach berücksichtigt werden.

Bei dem Verfahren nach Anspruch 5 wird aus der Zeitdauer zwischen dem wenigstens einen vorausgegangenen Einspritzvorgang und dem durchzuführenden Einspritzvorgang die Phasenlage bzw. ein normierter Wert der Druckabweichung zum Zeitpunkt des Beginns des durchzuführenden Einspritzvorganges bestimmt.

Dabei zeigt sich vorteilhaft, daß mit einer Trennung der beiden die Schwingung beschreibenden Parameter (Amplitude, d.h. Maximalauslenkung, einerseits und der Frequenz bzw. Überlagerung mehrere Frequenzen, die das Zeitverhalten der Druckschwingung bestimmen, andererseits) die Schwingung mit vertretbarem Aufwand in Kennfeldern abgelegt werden kann. Dadurch ist eine numerische Darstellung der Druckschwingung insbesondere hinsichtlich der relevanten Werte in Echtzeit möglich, indem zum einen die Amplitude der Druckschwingung bestimmt wird und zum anderen die Schwingungsdauer oder eine entsprechende Größe aus der Überlagerung mehrerer Schwingungsdauern.

Bei dem Verfahren nach Anspruch 6 wird aus der bei dem wenigstens .einen vorhergehenden Einspritzvorgang eingespritzten Kraftstoffmenge die Amplitude der Druckschwingung abgeleitet bzw. ein Faktor, mit dem der normierte Wert der Druckabweichung multipliziert wird.

Es hat sich gezeigt, daß damit die Amplitude bzw. der Faktor über eine entsprechende Kennlinie einfach bestimmt werden kann.

Bei dem Verfahren nach Anspruch 7 wird die bei dem wenigstens einen vorhergehenden Einspritzvorgang eingespritzte Kraftstoffmenge aus der Ansteuerdauer des Ventiles bei dem wenigstens einen vorhergehenden Einspritzvorgang abgeleitet.

Damit ist die Kraftstoffmenge einfach bestimmbar aus bereits verfügbaren Daten.

Bei dem Verfahren nach Anspruch 8 wird die Amplitude bzw. der Faktor anhand wenigstens einer Größe bestimmt, die die Kompressibilität des Kraftstoffes repräsentiert.

Dadurch kann unterschiedlichen Umgebungsbedingungen und derem Einfluß auf die Druckschwingungen Rechnung getragen werden.

Bei dem Verfahren nach Anspruch 9 ist die wenigstens eine Größe die Schallgeschwindigkeit des Kraftstoffes, das Elasitizitätsmodul des Kraftstoffes und/oder die Dichte des Kraftstoffes.

Diese Größen sind einfach verfügbar, so daß die Kompressibilität einfach bestimmt werden kann.

Bei dem Verfahren nach Anspruch 10 wird ein Wert des Druckes ermittelt aus der Amplitude und der Phasenlage bzw. dem normierten Wert der Druckabweichung und dem Faktor. Dieser Wert des Druckes wird zu dem Raildruck zu einem Summendruck addiert. Die Öffnungszeit des Einspritzventiles wird aus dem Kennfeld ermittelt, wobei dieser Summendruck als Common-Rail-Druck sowie die angeforderte Kraftstoffmenge die Eingangsgrößen bilden.

Dabei zeigt sich, daß der Berücksichtigung von Druckschwingungen aufgrund vorheriger Einspritzvorgänge mit vergleichsweise geringem Aufwand Rechnung getragen werden kann.

Ein Ausführungsbeispiel der Erfindung ist in der Zeichnung im einzelnen näher dargestellt. Es zeigt dabei im einzelnen:
- Fig. 1:: ein Ausführungsbeispiel eines Verfahrens zur Bestimmung eines korrigierten Wert des Druckes,
- Fig. 2:: eine Darstellung eines Kennfeldes, aus dem ein normierter Wert einer Druckabweichung entnommen werden kann.

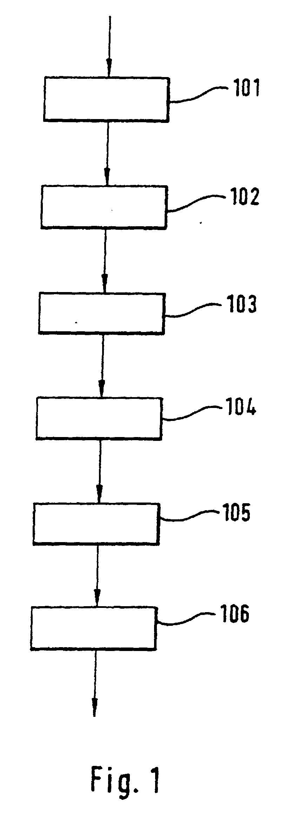

Figur 1 zeigt ein Ausführungsbeispiel des erfindungsgemäßen Verfahrens, das als Programmierung eines Mikroprozessors realisiert sein kann. Das erfindungsgemäße Verfahren wird dann vor jedem Einspritzvorgang durchlaufen um eine korrigierte Öffnungszeit und daraus eine korrigierte Ansteuerdauer des Einspritzventiles zu erhalten.

Zunächst wird in dem Schritt 101 eine Größe ermittelt, die die Kompressibilität des Kraftstoffes repräsentiert. Diese Größe kann beispielsweise die Schallgeschwindigkeit in dem Kraftstoff das Elastizitätsmodul des Kraftstoffes, die Dichte des Kraftstoffes bzw. eine Kombination dieser Größen sein.

Vorteilhaft wird die Größe in Abhängigkeit von dem Druck in dem Common-Rail-System sowie der Kraftstofftemperatur ermittelt. Diese beiden Größen beeinflussen die Kompressibilität des Kraftstoffes, so daß sich deren Berücksichtigung als vorteilhaft erwiesen hat.

Im Schritt 102 wird aus der ermittelten Größe das Zeitverhalten der Druckschwingung bestimmt. Dieses Zeitverhalten der Druckschwingung betrifft dabei eine Darstellung des Zeitverlaufes mit einer normierten Amplitude. Die aufgrund der vorliegenden Verhältnisse sich tatsächlich ergebende Amplitude wird in nachfolgenden Verfahrensschritten berücksichtigt.

Das Zeitverhalten kann modellhaft als eine Sinusschwingung mit negativem Vorzeichen dargestellt werden, die am Beginn eines Einspritzvorganges einsetzt. Zur Bestimmung des Zeitverhaltens muß also in diesem Fall aus der ermittelten Größe die Zeitdauer der Sinusschwingung ermittelt werden. Dazu kann beispielsweise die Zeitdauer über der Größe in einer Kennlinie dargestellt werden, die mit einer hinreichenden Zahl von Stützstellen abgespeichert wird.

In dem Schritt 103 wird dann aus der Zeitdifferenz vom Beginn des letzten Einspritzvorganges und der ermittelten Zeitdauer die Phasenlage der Druckschwingung zum aktuellen Zeitpunkt ermittelt.

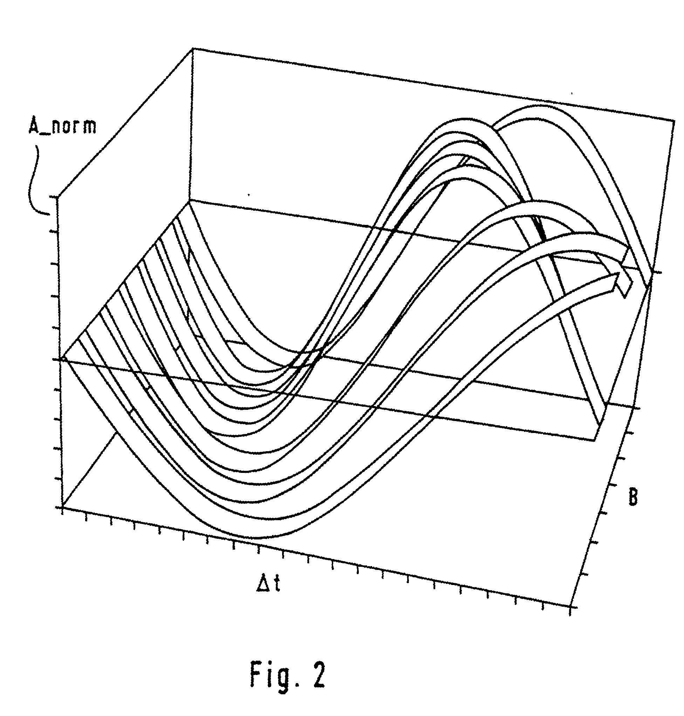

In der Praxis wird sich die Druckschwingung als eine Überlagerung mehrerer Schwingungen mit unterschiedlichen Frequenzen darstellen. Der normierte Verlauf dieser Druckschwingung wird in einem dreidimensionalen Kennfeld in Abhängigkeit von der bestimmten Größe abgelegt. Ein normierter Wert der Druckabweichung kann dann anhand der Zeit seit Beginn des letzten Einspritzvorganges und der bestimmten Größe aus dem Kennfeld ausgelesen werden. Ein Ausführungsbeispiel eines solchen Kennfeldes ist in der Fig. 2 dargestellt, in dem die normierte Amplitude A_norm, die bestimmte Größe B sowie die Zeit Δt ein dreidimensionales Kennfeld aufspannen. Dieses Kennfeld kann mit möglichst vielen Stützstellen abgespeichert werden, so daß eine Auswertung mit einer hinreichenden Genauigkeit möglich ist. Das Auslesen der normierten Druckabweichung aus dem Kennfeld entspricht in diesem Fall den Schriten 102 und 103.

In dem Schritt 104 wird wiederum eine Größe ermittelt, die die Kompressibilität des Kraftstoffes repräsentiert. Diese Größe kann beispielsweise die Schallgeschwindigkeit in dem Kraftstoff, das Elastizitätsmodul des Kraftstoffes, die Dichte des Kraftstoffes bzw. eine Kombination dieser Größen sein. Die in dem Schritt 104 ermittelte Größe kann dieselbe Größe sein wie in dem Schritt 101. Die Kompressibilität hat nicht nur Einfluß auf das Zeitverhalten der Schwingung sondern auch auf die Amplitude. Vorteilhaft wird diese Größe wiederum in Abhängigkeit von dem Druck in dem Common-Rail-System und/oder der Temperatur ermittelt.

In dem Schritt 105 wird zu der Größe eine Amplitude bzw. ein Faktor ermittelt, mit dem der normierte Wert der Druckabweichung multipliziert wird. Die Amplitude bzw. der Faktor können dabei in einerm Kennfeld über der bestimmten Größe aufgetragen sein.

Außer der Größe wird die Amplitude bzw. der Faktor noch anhand der bei dem letzten Einpritzvorgang entnommenen Kraftfstoffmenge ermittelt. Diese Kraftfstoffmenge bestimmt wesentlich die Amplitude bzw. den Faktor. Die Kraftfstoffmenge kann beispielsweise aufgrund der Öffnungsdauer des Einspritzventiles bei dem letzten Einspritzvorgang abgeleitet werden. Es ist auch möglich, den Wert der bei dem letzten Einspritzvorgang angeforderten Kraftfstoffmenge als die Kraftfstoffmenge zu nehmen, die bei dem letzten Einspritzvorgang eingespritzt wurde.

In dem Schritt 106 wird aus der Amplitude und der Phasenlage anhand des Verlaufes der Sinusschwingung der Wert des Druckes ermittel, der zu dem statischen Systemdruck im Common-Rail-System addiert wird. Wenn die Druckschwingung aus einer Überlagerung mehrerer Frequenzen besteht und deswegen in den Schritten 102 und 103 ein normierter Wert der Druckabweichung aus einem Kennfeld ermittelt wurde, wird dieser normierte Wert der Druckabweichung in dem Schritt 106 entsprechend mit dem Faktor mulitpliziert, um den Wert des Druckes zu ermitteln, der zu dem statischen Druck im Common-Rail-System addiert wird.

Figur 2 zeigt eine Darstellung einer normierten Druckschwingung in Abhängigkeit von der die Kompressibilität des Kraftstoffes beschreibenden Größe B und der Zeitdifferenz Δt seit Beginn des letzten Einspritzvorganges.

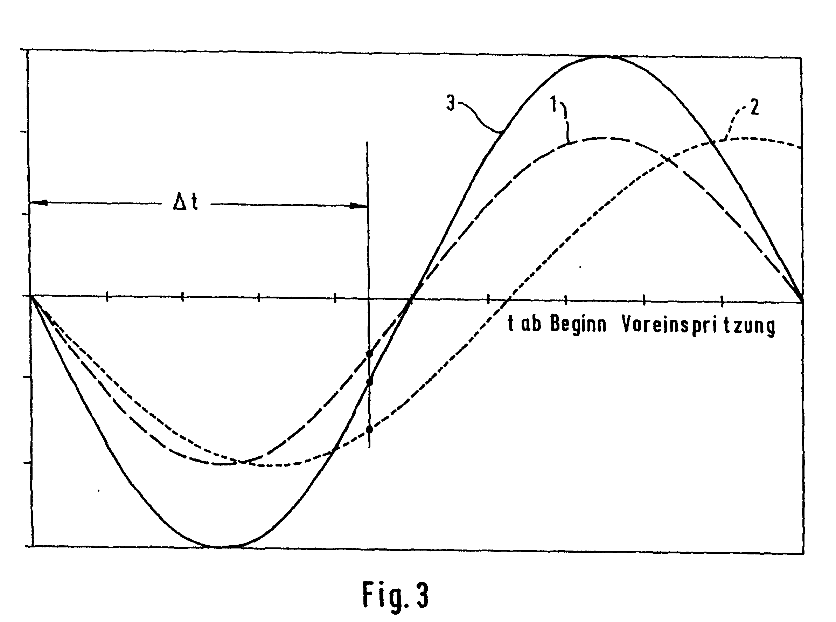

Figur 3 zeigt beispielhaft die Bestimmung des Wertes des Druckes, um den der Druck im Common-Rail-System korrigiert wird.

Zunächst wird die Zeitdauer der Druckschwingung bestimmt. Beispielhaft sind hier zwei unterschiedliche normierte Druckschwingungen 1 und 2 dargestellt. Die Druckschwingung 1 weist dabei die ermittelte Zeitdauer auf. Weiterhin wird noch die Amplitude der Druckschwingung berücksichtigt bzw. ein Faktor, mit dem der normierte Wert der Druckschwingung multipliziert wird. Die dargestellte Druckschwingung 3 entspricht der Druckschwingung 1 unter Beachtung der Amplitude bzw. des Faktors. Der entsprechende Wert auf der Kurve 3 ist also der Wert des Druckes, um den der Druck in dem Common-Rail-System korrigiert werden muß.

## Patentansprüche

1. Verfahren zur Bestimmung der Öffnungszeit eines Einspritzventiles eines Common-Rail-Einspritzsystemes, bei dem aus einem Kennfeld anhand der einzuspritzenden Kraftstoffmenge und des statischen Druckes im Common-Rail eine Einspritzdauer abgeleitet wird,
**dadurch gekennzeichnet, daß** für die Ablesung im Kennfeld der Wert des statischen Druckes im Common-Rail um einen bestimmten Betrag korrigiert wird (106), der sich
• sowohl aus dem Schwingungsverhalten des Kraftstoffes in Abhängigkeit von dessen Kompressibilität,
• als auch aus der entnommenen Kraftstoffmenge oder der Ansteuerdauer des Einspritzventils bei wenigstens einem vorausgehenden Einspritzvorgang,
• als auch der Zeit zwischen dem wenigstens einen vorausgehenden Einspritzvorgang und dem aktuellen Einspritzvorgang ergibt.

2. Verfahren nach Anspruch 1,
**dadurch gekennzeichnet, daß** das Zeitverhalten einer Druckschwingung anhand wenigstens einer Größe bestimmt wird, die die Kompressibilität des Kraftstoffes repräsentiert (101).

3. Verfahren nach Anspruch 2,
**dadurch gekennzeichnet, daß** die wenigstens eine Größe die Schallgeschwindigkeit des Kraftstoffes, das Elasitizitätsmodul des Kraftstoffes und/oder die Dichte des Kraftstoffes ist (101).

4. Verfahren nach Anspruch 2 oder 3,
**dadurch gekennzeichnet, daß** die wenigstens eine Größe anhand des statischen Raildruckes und/oder der Kraftfstofftemperatur bestimmt wird (101).

5. Verfahren nach einem der Ansprüche 2 bis 4,
**dadurch gekennzeichnet, daß** aus der Zeitdauer zwischen dem wenigstens einen vorausgegangenen Einspritzvorgang und dem durchzuführenden Einspritzvorgang die Phasenlage bzw. ein normierter Wert der Druckabweichung zum Zeitpunkt des Beginns des durchzuführenden Einspritzvorganges bestimmt wird (103).

6. Verfahren nach einem der Ansprüche 1 bis 5,
**dadurch gekennzeichnet, daß** aus der bei dem wenigstens einen vorhergehenden Einspritzvorgang eingespritzten Kraftstoffmenge oder der Ansteuerdauer des Einspritzventils die Amplitude der Druckschwingung abgeleitet wird bzw. ein Faktor, mit dem der normierte Wert der Druckabweichung multipliziert wird (105).

7. Verfahren nach Anspruch 6,
**dadurch gekennzeichnet, daß** die bei dem wenigstens einen vorhergehenden Einspritzvorgang eingespritzte Kraftstoffmenge aus der Ansteuerdauer des Ventiles bei dem wenigstens einen vorhergehenden Einspritzvorgang abgeleitet wird (105).

8. Verfahren nach Anspruch 6 oder 7,
**dadurch gekennzeichnet, daß** die Amplitude bzw. der Faktor anhand wenigstens einer Größe bestimmt wird, die die Kompressibilität des Kraftstoffes repräsentiert (104).

9. Verfahren nach Anspruch 8,
**dadurch gekennzeichnet, daß** die wenigstens eine Größe die Schallgeschwindigkeit des Kraftstoffes, das Elasitizitätsmodul des Kraftstoffes und/oder die Dichte des Kraftstoffes ist (104).

10. Verfahren nach Anspruch 5 sowie einem der Ansprüche 6 bis 9,
**dadurch gekennzeichnet, daß** ein Wert des Druckes ermittelt wird aus der Amplitude und der Phasenlage bzw. dem normierten Wert der Druckabweichung und dem Faktor, wobei dieser Wert zu dem Raildruck zu einem Summendruck addiert wird, und daß die Öffnungszeit des Einspritzventiles aus dem Kennfeld ermittelt wird, wobei dieser Summendruck als Common-Rail-Druck sowie die angeforderte Kraftstoffmenge die Eingangsgrößen bilden (106).

## Claims

1. Process for determining the opening-period of an injection valve of a common rail injection system, in which the duration of injection is deduced, in connection with the quantity of fuel to be injected and the static pressure of the common rail, from a performance graph,
**characterized in that** the value of the static pressure in the common rail is corrected by a certain amount (106) for the reading from the characteristic field, this amount resulting from:
- the oscillating behaviour of the fuel in accordance with its compressibility,
- as well as the quantity of fuel withdrawn or the period of control of the injection valve for at least one preceding injection process,
- and also the time between the at least one preceding injection process and the ongoing injection process.

2. Process in accordance with claim 1,
**characterized in that** the temporal behaviour of variation in pressure is determined in connection with at least one quantity or magnitude that represents the compressibility of the fuel (101).

3. Process in accordance with claim 2,
**characterized in that** the at least one quantity or magnitude is the velocity of sound of the fuel, the fuel elasticity modulus and/or the density of the fuel (101).

4. Process in accordance with claim 2 or 3,
**characterized in that** the at least one quantity or magnitude is determined in connection with the static rail pressure and/or the fuel temperature (101).

5. Process in accordance with one of claims 2 to 4,
**characterized in that** the phase relationship or a standardized value of the pressure variation at the time-point of the start of the injection process to be carried out (103) is determined from the time-period between the at least one previous injection process and the injection process to be carried out.

6. Process in accordance with one of claims 1 to 5,
**characterized in that**
the amplitude of the pressure oscillation is deduced from the quantity of fuel injected in at least one preceding injection process, or from the control period of the injection valve, or **in that** a factor is multiplied by the standardized value of the pressure divergence (105).

7. Process in accordance with claim 6,
**characterized in that**
the fuel quantity injected in at the least one preceding injection process is deduced from the period of control of the valve in the at least one preceding injection process (105).

8. Process in accordance with claim 6 or 7,
**characterized in that**
the amplitude or the factor is determined in connection with at least one magnitude that represents the compressibility of the fuel (104).

9. Process in accordance with claim 8,
**characterized in that**
the at least one magnitude is the velocity of sound of the fuel, the elasticity modulus of the fuel and/or the fuel density (104).

10. Process in accordance with claim 5 and one of claims 6 to 9,
**characterized in that**
a value of the pressure is determined from the amplitude and the phase relationship or the standardized value of the pressure divergence and the factor, whereby this value is added to the rail pressure to give a total pressure, and **in that** the opening-period of the injection valve is determined from the performance graph, whereby the said total pressure forms the input magnitudes as common-rail pressure and the required quantity of fuel (106).

## Revendications

1. Procédé pour déterminer le temps d'ouverture d'un injecteur dans un système d'injection dit à "common-rail" (rampe à carburant commune), dans lequel on dérive à partir d'un champ de caractéristiques une durée d'injection en se basant sur la quantité de carburant à injecter et sur la pression statique dans le common-rail,
**caractérisé en ce que** pour la lecture dans le champ des caractéristiques, on corrige (106) la valeur de la pression statique dans le common-rail d'une valeur déterminée qui résulte
- aussi bien du comportement oscillatoire du carburant en fonction de sa compressibilité,
- que de la quantité de carburant prélevée ou de la durée de pilotage de l'injecteur dans au moins une opération d'injection précédente,
- et que du temps entre ladite au moins une opération d'injection précédente et l'opération d'injection actuelle.

2. Procédé selon la revendication 1, **caractérisé en ce que** l'on détermine le comportement temporel d'une oscillation de pression en se basant sur au moins une grandeur qui représente la compressibilité du carburant (101).

3. Procédé selon la revendication 2, **caractérisé en ce que** ladite au moins une grandeur est la vitesse du son dans le carburant, le module d'élasticité du carburant et/ou la densité du carburant (101).

4. Procédé selon l'une ou l'autre des revendications 2 et 3, **caractérisé en ce que** l'on détermine ladite au moins une grandeur en se basant sur la pression statique dans le Rail et/ou sur la température du carburant (101).

5. Procédé selon l'une des revendications 2 à 4, **caractérisé en ce qu'**en se basant sur la période temporelle entre ladite au moins une opération d'injection précédente et l'opération d'injection à effectuer, on détermine la position en phase ou une valeur normée de l'écart de pression à l'instant du début de l'opération d'injection à effectuer (103).

6. Procédé selon l'une des revendications 1 à 5, **caractérisé en ce qu'**en se basant sur la quantité de carburant injectée pendant ladite au moins une opération d'injection précédente ou sur la durée de pilotage de l'injecteur, on dérive l'amplitude de l'oscillation de pression ou un facteur avec lequel on multiplie la valeur normée de l'écart de pression (105).

7. Procédé selon la revendication 6, **caractérisé en ce que** l'on dérive la quantité de carburant injectée pendant ladite au moins une opération d'injection précédente à partir de la durée de pilotage de l'injecteur pendant ladite au moins une opération d'injection précédente (105).

8. Procédé selon l'une ou l'autre des revendications 6 et 7, **caractérisé en ce que** l'on détermine l'amplitude ou le facteur en se basant sur au moins une grandeur qui représente la compressibilité du carburant (104).

9. Procédé selon la revendication 8, **caractérisé en ce que** ladite au moins une grandeur est la vitesse du son dans le carburant, le module d'élasticité du carburant et/ou la densité du carburant (104).

10. Procédé selon la revendication 5 ainsi que l'une des revendications 6 à 9, **caractérisé en ce que** l'on détermine une valeur de la pression à partir de l'amplitude et de la position en phase ou de la valeur normée de l'écart de pression et du facteur, cette valeur étant additionnée à la pression dans le "rail" pour former une pression sommée, et **en ce que** l'on détermine le temps d'ouverture de l'injecteur à partir du champ de caractéristiques, cette pression sommée à titre de pression dans le common-rail ainsi que la quantité de carburant demandée formant les grandeurs d'entrée (106).
